# EUROPÄISCHE PATENTSCHRIFT

(11) **EP 2 002 247 B1**
(45) Veröffentlichungstag und Bekanntmachung des Hinweises auf die Patenterteilung: **22.07.2015**
(21) Anmeldenummer: 07723675.0
(22) Anmeldetag: 28.03.2007
(51) Int. Cl.: G01N 27/00

(54) **VORRICHTUNG AUS EINER MESSKAMMER UND EINEM ÜBER EINEN SCHNELLVERSCHLUSS IN DIE MESSKAMMER INTEGRIERBAREN RESONATOR FÜR DIE FLÜSSIGKEITSSENSORIK**
APPARATUS COMPRISING A MEASUREMENT CHAMBER AND A RESONATOR, WHICH CAN BE INTEGRATED IN THE MEASUREMENT CHAMBER VIA A QUICK-ACTION CLOSURE, FOR THE LIQUID SENSOR SYSTEM
DISPOSITIF CONSTITUE D'UNE CHAMBRE DE MESURE ET D'UN RESONATEUR INTEGRE DANS LA CHAMBRE DE MESURE AU MOYEN D'UNE FERMETURE RAPIDE ET DESTINE A LA DETECTION DE LIQUIDE

(30) Priorität: 31.03.2006 DE 102006015512
(43) Veröffentlichungstag der Anmeldung: 17.12.2008
(73) Patentinhaber: Andreas Hettich GmbH & Co. KG, 78532 Tuttlingen (DE)
(72) Erfinder: GEHRING, Frank, K., 72364 Obernheim (DE)
(74) Vertreter: Puschmann Borchert Bardehle Patentanwälte Partnerschaft mbB
(86) Internationale Anmeldenummer: PCT/EP2007/002729
(87) Internationale Veröffentlichungsnummer: WO 2007/112897

(56) Entgegenhaltungen:
- WO-A-02/12873
- WO-A-2005/066621
- WO-A-2006/027945
- SCHWEYER M G ET AL: "Comparison of surface transverse wave (STW) and shear horizontal acoustic plate mode (SHAPM) devices for biochemical sensors" FREQUENCY CONTROL SYMPOSIUM, 1997., PROCEEDINGS OF THE 1997 IEEE INTERNATIONAL ORLANDO, FL, USA 28-30 MAY 1997, NEW YORK, NY, USA,IEEE, US, 28. Mai 1997 (1997-05-28), Seiten 147-155, XP010257427 ISBN: 0-7803-3728-X
- KUZNETSOVA LARISA A ET AL: "Microparticle concentration in short path length ultrasonic resonators: Roles of radiation pressure and acoustic streaming" JOURNAL OF THE ACOUSTICAL SOCIETY OF AMERICA, AIP / ACOUSTICAL SOCIETY OF AMERICA, MELVILLE, NY, US, Bd. 116, Nr. 4, Oktober 2004 (2004-10), Seiten 1956-1966, XP012072547 ISSN: 0001-4966

## Beschreibung

Die Erfindung betrifft eine Vorrichtung, bestehend aus einer Messkammer und einem Resonator nach dem Oberbegriff des Patentanspruches 1.

Mit dem Gegenstand der DE 40 13 665 A1 ist ein Sensor zum Nachweisen eines Stoffes in einer Flüssigkeit bekannt geworden, wobei der Sensor als Resonator ausgebildet ist, der mit Hilfe einer Dichtungseinrichtung in einer Messkammer integriert ist.

Dieser Resonator steht an einer seiner Stirnflächen mit der zu untersuchenden Flüssigkeit in Kontakt, und eine Massenanlagerung durch einen nachzuweisenden bzw. in seiner Konzentration zu messenden Stoffes auf dieser Oberfläche führt zu einer Änderung der Resonanzfrequenz oder/und der Schwingungsamplitude des Resonators. Eine Änderung dieser beiden Messgrößen kann auch durch unterschiedliche Flüssigkeitseigenschaften hervorgerufen werden.

Die Erfindung betrifft deshalb insbesondere das Gebiet der piezceiektrischen Schwingquarzsensoren, die zum Nachweis bzw. zur Messung der Konzentration von biologischen, chemischen oder biochemischen Substanzen sowie von Mikroorganismen in Flüssigkeiten oder zur Bestimmung der Flüssigkeitseigenschaften dienen.

Bezüglich der weiteren Funktion eines solchen Resonators wird auf den Offenbarungsgehalt der DE 40 13 665 A1 verwiesen, der vollinhaltlich von dem Offenbarungsinhalt der vorliegenden Erfindung umfasst sein soll.

Ein ähnlicher Stand der Technik ergibt sich aus der DE 197 34 706 A1, die ebenfalls einen piezoelektrischen Resonator beschreibt, der über eine Dichtungsanordnung in einer Messkammer integriert ist und auch zur Untersuchung biologischer, chemischer oder biochemischer Substanzen dient.

Für in Gasphase betriebene Schwingquarze werden üblicherweise Schwingquarzhalterungen benutzt, bei denen der Schwingquarz durch zwei elektrische Zuführungsdrähte mit bügelartigen Enden kontaktiert und fixiert wird. Die Zuführungsdrähte durchdringen eine elektrisch isolierte Grundplatte, auf die eine elektromagnetische Schirmung übergestülpt werden kann. Eine andere Methode zur Fixierung und Kontaktierung findet sich in der DE 3446612 oder der DE 19926944.

In Flüssigphase wird die Abdichtung der oberen Stirnfläche bei den bekannten Halterungssystemen für piezoelektrische Schwingquarze entweder durch eine Dichtung bewirkt, meist aus einem Silikonring, die auf die obere Stirnfläche des Schwingquarzes drückt, oder durch Einkleben des Schwingquarzes in eine Halterung realisiert (DE 197 34 706 A1). Die elektrische Kontaktierung erfolgt über Kontaktfedern, Bonddrähte, Leitgummi oder leitfähige Klebstoffkörper (DE 401 13 665). In der DE 197 34 706 A1 ist der Schwingquarz direkt in die Messkammer, die aus einem Spritzgussteil gefertigt ist, fest über Klebstoff integriert. Die elektrische Kontaktierung erfolgt mechanisch spannungsfrei über Bonddrähte. Diese Messkammer, die auch als "Durchflusszelle" bezeichnet wird, kann in eine Messanordnung ohne Beeinflussung der Schwingquarzparameter ein- und ausgebaut werden.

Bei den Halterungsprinzipien nach der DE 401 13 665 A1, bei denen ein Dichtungsring auf die obere Stirnfläche drückt, ist die Schwingquarzoberfläche zwar für eine biologische Beschichtung oft gut zugänglich und auch eine optische Zugänglichkeit der Schwingquarzoberfläche im in die Messkammer eingebauten Zustand ist prinzipiell möglich, der Schwingquarz wird aber durch das Dichtungsprinzip bei einem Aus- und Einbau unterschiedlich mechanisch verspannt. Das hat zur Folge, dass ein kurzfristiger Aus- und Einbau während einer Messung und damit die Charakterisierung der Schwingquarzoberfläche durch ein Lichtmikroskop, Rasterkraftmikroskop etc. nicht möglich ist.

Eine gleichbleibende elektrische Kontaktierung ist bei diesem Prinzip ebenfalls sehr schwierig oder gar nicht zu erreichen. Des weiteren ist die Integration des Schwingquarzes in die Messkammer oder in die Messanordnung mit entsprechender Kontaktierung sehr zeitaufwändig und nur durch Fachpersonal durchführbar.

Nicht selten führt das Anpressen der Dichtung auf den Schwingquarz zu derartig großen mechanischen Spannungen, dass es zum Bruch des Schwingquarzes beim Einbau kommt.

Ein weiterer Nachteil dieser Methode ist die nicht exakt definierte Benetzungsfläche der oberen Schwingquarzoberfläche. Bei zu geringem Anpressdruck der Dichtung kommt es zum Austritt der Benetzungsflüssigkeit bzw. zu dem daraus resultierenden elektrischen Kurzschluss der beiden Quarzelektroden. Das Einsetzen bzw. Herausnehmen des Schwingquarzes erfolgt z. B. mit einer Pinzette, wodurch es ebenfalls zum Bruch des Schwingquarzes kommen kann und im Falle einer biologischen Beschichtung diese zumindest zum Teil abgekratzt oder zerstört wird. Ein sehr entscheidender Nachteil dieses Halterungsprinzips in Bezug auf die Analytik von Flüssigkeiten, die z. B. "schwere" Partikel oder menschliche Zellen beinhalten, ist die Prinzip bedingte Flussbarriere durch die großbauende Dichtung bzw. den großbauenden Dichtungsring. Eine tangentiale Flusseinleitung ist dadurch nur bedingt möglich und die Entfernung des Analyten nach einer Messung ist nur mit sehr hohen Flussraten oder gar nicht möglich. Die hohen Flussraten beeinflussen wiederum das Schwingverhalten des Schwingquarzes und erfordern eine sehr hohe Dichtigkeit auch bei hohen Drucken.

Bei dem in der DE 197 34 706 A1 beschriebenen Haltungssystem, bei dem der Schwingquarz fest über Klebstoff in die Messkammer integriert wird, ist eine Charakterisierung der Schwingquarzoberfläche mit anderen Methoden (Lichtmikroskopie, Rasterkraftmikroskopie etc.) und eine biologische Beschichtung bzw. Reinigung der Schwingquarzoberfläche außerhalb der Messkammer nicht möglich. Bei anderen Halterungsprinzipien, bei denen der Schwingquarz in die Halterung eingeklebt wird, ist die Schwingquarzoberfläche im aus der Messkammer ausgebauten Zustand wie bei der "Klemmmethode" oft für eine biologische Beschichtung zugänglich und auch im eingebauten Zustand prinzipiell meist optisch zugänglich.

Diese Systeme haben aber den Nachteil, dass durch die Verklebung der Schwingquarz mechanisch verspannt werden kann. Ein weiterer Nachteil ist das aufwändige Einkleben des Schwingquarzes in das Halterungssystem, bei dem eine exakte Dosierung und Positionierung des Klebstoffes erforderlich ist. Klebstoffreste, durch nicht exakte Klebstoffaufbringung oder das Anlagern von Klebstoffdämpfen auf zentrumsnahe Bereiche der Schwingquarzoberfläche, verändern die Schwingungscharakteristik und machen eine biologische Beschichtung oft unmöglich. Klebstoffe, wie Silikonklebstoffe, die den Vorteil besitzen, dass sie im ausgehärteten Zustand noch gute Dehnungswerte besitzen und weitgehendst biokompatibel sind, haben den Nachteil von einer relativ langen Aushärtungszeit. Schnellaushärtende Klebstoffe, z. B. auf Cyanacrylat-Basis, haben sehr kleine Dehnungswerte und können deshalb den Schwingquarz bei der Aushärtung sehr stark verspannen.

Die Dichtigkeit kann bei diesen Klebstoffen nur bei sehr kleinen Spaltmaßen zwischen Halterung und Schwingquarz erreicht werden, welches die Montage außerordentlich erschwert. Des weiteren dampfen diese Klebstoffe, die nur bedingt biokompatibel sind, sehr stark aus und setzen sich damit sehr ieicht auf zentrumsnahe Bereiche ab. , Die elektrische Kontaktierung ist bei den Halterungssystemen, bei denen der Schwingquarz eingeklebt wird, meistens sehr aufwändig, da sie entweder gleichzeitig mit dem Aufbringen des Klebstoffes oder bei aus der Messkammer herausnehmbaren Halterungen über Kontaktfederstifte oder ähnliches, die an die in Gasphase betriebene Stirnfläche angedrückt werden, erfolgen muss.

Bei der Kontaktierung mit Kontaktstiften wird der Schwingquarz zusätzlich mechanisch verspannt. Bei einer von Schwingquarz zu Schwingquarz leicht unterschiedlichen Positionierung des Schwingquarzes beim Einkleben ist diese mechanische Verspannung nach einem Aus- und Einbau unterschiedlich und damit eine Charakterisierung der Schwingquarzoberfläche mit anderen Methoden während einer Messung schwierig.

Auch schon durch leichte Unterschiede in der Positionierung des Schwingquarzes können die Kräfte auf den Schwingquarz durch die Kontaktstifte so groß werden, dass der Schwingquarz bricht oder die Klebstoffdichtung gelöst wird und damit Undichtigkeiten auftreten. Dieses Problem wird oft durch eine ringförmige Anschlaglippe verhindert, wodurch aber bei diesen Halterungssystemen eine tangentiale Flusseinleitung schwierig oder unmöglich ist. Aufgrund der erwähnten Nachteile ist daher eine automatisierte bzw. kostengünstige Montage der Schwingquarze in die Schwingquarzhalterung durch Einkleben sehr schwierig zu realisieren.

Mit der Druckschrift WO 02/12873 A wird ein Quarzkristall-Sensor als Massen-Sensorsystem offenbart, welcher kleinste Veränderungen auf der Oberfläche eines Piezoquarzkristall misst, wobei zwei Gehäuseteile eine Messkammer ausbilden, in der ein Resonator angeordnet ist, welcher lediglich von einem dünnen Dichtring an seinem Außenumfang gehalten und abgedichtet ist, wobei der Dichtring an einem oberen Dichtungsring anliegt und auf einem unteren Halterungsring aufliegt.

Mit der Druckschrift WO 2005/066621 wird ein Aufbau eines Oberflächenakustikwellensensors zur Messung von Stoffkonzentrationen und Substanzen in Flüssigkeiten offenbart, wobei der Sensor von der Flüssigkeit durchflossen ist und eine Schaltkreisschicht und einen Akustikwellensensor aufweist, wobei der Akustikwellensensor mittels einer leitfähigen Elastomerdichtung dichtend auf der Schaltkreisschicht angeordnet ist.

Der Erfindung liegt deshalb die Aufgabe zugrunde,die beim Einbau eines Resonators enstehende mechanische Belastung zu verringern und eine verbesserte mechanische Isolierung vom Gehäuse auszubilden.

Zur Lösung der gestellten Aufgabe dient die technische Lehre des Anspruches 1.

Wesentliches Merkmal der Erfindung ist, dass der Resonator lediglich an seinem Außenumfang von einem dünnen elastomeren Ring gehalten und abgedichtet ist und dass im radialen Abstand vom Außendurchmesser des Resonators der Folienring einerseits abdichtend an einem oberen Dichtungsring der Messkammer anliegt und andererseits auf einem Halterungsring aufliegt.

Mit der gegebenen technischen Lehre ergibt sich der Vorteil, dass nun die Dichtflächen für die Abdichtung zwischen der Messkammer und der Messvorrichtung mit dem Resonator nicht mehr in den Bereich des Resonators hineinverlegt sind, sondern sich radial auswärts im Abstand vom Außenumfang vom Resonator befinden. Damit ist nicht mehr die Notwendigkeit gegeben, dass die Dichtflächen unmittelbar selbst auf dem Resonator gebildet sind, was mit schwerwiegenden Nachteilen verbunden ist, wie vorstehend im Stand der Technik beschrieben wurde.

Das Wesen der Erfindung liegt also darin, dass der Resonator lediglich an einem sehr dünnen elastomeren Ring an seinem Außenumfang gehalten und abgedichtet wird und dass im radialen Abstand von dieser Halterung am Resonator außenliegend der elastomere Ring zwischen zwei einander zugeordneten Flächen aufgenommen ist, wobei eine dieser Flächen als Dichtungsring ausgebildet ist.

Der Begriff "elastomere Ring" für die Halterung eines scheibenförmigen Resonators wird sehr weit im Sinne der vorliegenden Erfindung verstanden.

In einer ersten, bevorzugten Ausgestaltung besteht dieser elastomere Ring lediglich aus einem Folienring, der die Dicke einer üblichen Folie hat, nämlich im Bereich von 50 bis 300 µm liegt und aus einem üblichen Folienmaterial, wie z. B. PVC oder dergleichen besteht. Es wird hierbei bevorzugt, wenn dieser Folienring möglichst dünn ist und einseitig mit einer Klebeschicht beschichtet ist, weil dann die Halterung zwischen diesem Ring und dem Resonator über eine Klebeschicht am Außenumfang des Resonators erfolgt.

Es werden jedoch auch noch andere Halterungsprinzipien als erfindungswesentlich beansprucht und nicht nur eine Klebehalterung zwischen diesem Folienring und dem Resonator. Dem gemäß kommt als weitere lösbare Halterung z. B. eine Anordnung in Betracht, bei der der Folienring eine obere und eine untere umlaufende Ringnut bildet und der scheibenförmige Resonator mit seinem umlaufenden Außenumfang in diese umlaufende Ringnut eingeschoben ist.

Statt einer umlaufenden Halterung des scheibenförmigen Resonators in einer umlaufenden Nut ist selbstverständlich auch beansprucht, dass nur eine stückweise Halterung durch einzelne voneinander am Umfang verteilt angeordnete Halterippen vorliegt.

Statt der Klebedichtung und der abdichtenden Halterung in einer Ringnut wird als weitere Ausführung im Sinne der Erfindung beansprucht, dass lediglich eine nichtklebende Folie unter Anpressdruck an den Randbereich des Resonators aufgelegt wird und die erforderliche Abdichtung nur durch die Anpresskraft, jedoch ohne Klebeverbund, erreicht wird.

Der Begriff "scheibenförmiger" Resonator bezieht sich nur auf ein bevorzugtes Ausführungsbeispiel der Erfindung. Es ist selbstverständlich auch erfindungswesentlich beansprucht, dass der Resonator andere Umrisse aufweist, z. B. kann er rechteckig, viereckig, sechseckig, als Parallelogramm und dergleichen ausgebildet sein. Die Verwendung des Begriffes "scheibenförmigen" Resonators ist also nur zur vereinfachten Erläuterung eines bevorzugten Ausführungsbeispieles gedacht.

Dementsprechend muss natürlich auch die Dichtungsanordnung, die nachfolgend genauer beschrieben ist, an den aktuellen Umriss des Resonators angepasst werden. Wichtig bei allen Ausführungsbeispielen ist jedenfalls, dass die Dichtungsanordnung sich nur um ein gewisses geringes Maß in den Außenbereich des Resonators erstreckt, dort wo nicht seine aktive, schwingende Fläche ist und dass dadurch der Resonator vollkommen druckfrei gehalten wird.

Neben der vorgenannten Klebehaltung oder der Einschubhalterung ist es selbstverständlich auch möglich, einen Folienring elektrostatisch auszubilden und durch elektrostatische Anhaftung den Resonator in seinem Außenbereich an diesen Folienring zur Anlage zu bringen.

In diesem Zusammenhang ist es deshalb auch möglich, statt einer Kunststofffolie als elastomeren Ring auch eine Metallfolie zu verwenden oder Kunststoff-Metallverbundstoffe bzw. Kunststoff-Keramikverbundstoffe, die alle vom Erfindungsgedanken der vorliegenden Erfindung umfasst sein sollen.

Wichtig ist, dass für die Verbesserung des Schwingverhaltens des Resonators die Abdichtung des Resonators nur an dem mit sehr kleiner Amplitude schwingenden Außenbereich verspannungsfrei erfolgt und dass die zweite Abdichtfläche radial auswärts vom Außenumfang des Resonators in den Bereich der Messkammer hineinverlegt wird, um so den Resonator möglichst wenig schwingungsgedämpft und verspannungsfrei unterhalb oder in dem besagten elastomeren Ring (Folienring) zu halten.

Statt der Anbringung einer separaten Halterungsfolie (Ringfolie) zur Halterung des Resonators kann es auch vorgesehen sein, die Folie durch Besputterung bzw. Beschichtung des Resonators selbst vorzusehen.

Dies bedeutet, dass z.B. in einem Besputterungsvorgang die Oberfläche des Resonators mit einem Goldbelag bedampft wird und dieser Goldbelag wird radial auswärts über den Außenumfang des Resonators herausgezogen und weitergeführt, um so den elastischen Ring auszubilden. Dies kann auch durch eine Kunststoffbeschichtung oder andere Werkstoffe erfolgen.

Wichtig auch bei diesem Ausführungsbeispiel ist, dass der Ring durch Besputterung unmittelbar auf der Oberfläche des Resonators angebracht ist, so dass ein absolut ebener Übergang - ohne Zwischenschaltung irgendwelcher Folienstufen - die Messkammer ausbildet und dass die Messkammer vollkommen eben und kantenfrei damit ausgebildet ist. Es gibt damit selbst nicht den kleinsten Stufenübergang, wie es bei dem später zu beschreibenden Ausführungsbeispiel der Fall ist, wo der Folienring beispielsweise eine Stärke von 100 µm aufweist und mit seinem scheibenförmigen Innenumfang den Außenumfang des Resonators teilweise übergreift und dort haltert.

Will man auch z. B. "schwere" Partikel oder menschliche Zellen injizieren, darf die Halterung nur geringfügige Flussbarrieren aufweisen. Ansonsten können sich die "schweren" Partikel bzw. Zellen aufgrund der Barrieren absetzen und damit nicht mehr aus der Messkammer entfernt werden. Bei einer biologischen Beschichtung der in Flüssigphase betriebenen Stirnfläche sollte die Halterung so ausgelegt sein, dass eine tangentiale Flusseinleitung möglich ist, damit die biologische Schicht nicht "abgewaschen" wird und gleichzeitig Varianten der Fließparameter geringeren Einfluss haben. Für die optische Beobachtung der Schwingquarzoberfläche im in die Messkammer eingebauten Zustand während der Befüllung der Messkammer und des Anlagerns von Analyt ist eine optische Zugänglichkeit entscheidend. Ein weiterer wichtiger Punkt ist die Zugänglichkeit der Schwingquarzoberfläche nach dem Ausbau des in die Schwingquarzhalterung eingebauten Schwingquarzes aus der Messkammer, um die Schwingquarzoberfläche mit einer oder mehreren biologischen Schichten zu versehen. Diese Zugänglichkeit eröffnet zusammen mit der Forderung, dass ein schneller Aus- und Einbau in die Messkammer des in die Schwingquarzhalterung eingebauten Schwingquarzes ohne Beeinflussung der Schwingquarzparameter ausführbar ist, die Möglichkeit zur Charakterisierung der Schwingquarzoberfläche während einer Messung, z. B. mit einem Lichtmikroskop, einem Rasterkraftmikroskop etc. Die Schwingquarzhalterung soll im weiteren die Handhabung der im Fall der Biosensorik mit einer biologischen Schicht versehenen Schwingquarze außerhalb der Messkammer entscheidend verbessern. Die direkte Handhabung des Schwingquarzes mit einer Pinzette kann sehr schnell zur Rissbildung des brüchigen Schwingquarzes führen. Ein Berühren der Schwingquarzoberfläche mit einer Pinzette zerstört außerdem die biologische Schicht.

Mit den erfindungsgemäßen Maßnahmen ergeben sich folgende Vorteile:
- vollständige Abdichtung der oberen Stirnfläche (Verhinderung eines elektrischen Kurzschlusses zwischen der oberen und unteren Elektrode)
- schneller Aus- und Einbau des in die Schwingquarzhalterung eingebauten Schwingquarzes in die Messanordnung (Integration in die Messkammer bzw. das Fließsystem; elektrische Kontaktierung zur Schwingungsanregung und zum Abgreifen des sensorischen Signals)
- definierte Schwingquarzoberfläche, die benetzt wird (Problem: Signaländerung durch Änderung der Benetzungsfläche)
- geringe Dämpfung und mechanische Verspannung durch Dichtung des Schwingquarzes
- keine Beeinflussung der Schwingquarzparameter durch Aus- und Einbau in die Messkammer bzw. das Fließsystem (gleichbleibende elektrische Bedingungen, gleichbleibende mechanische Verspannungen des Schwingquarzes und gleichbleibende Dämpfung)
- kleiner Kontaktwiderstand Schwingquarz/Halterung
- möglichst vollständige Entfernung aller Partikel und Zellen aus der Messkammer nach vollzogener Messung (Reinigung)
- variables Zellvolumen möglich (kleines Totvolumen)
- die Schwingquarzoberfläche ist prinzipiell im in die Messkammer eingebauten Zustand optisch zugänglich
- leichter Aus- und Einbau des Quarzes in die Messkammer ohne Beschädigung einer möglichen biologischen Beschichtung
- gute Handhabung des brüchigen Quarzes außerhalb der Messanordnung (biologische Beschichtung, Regeneration, Betrachtung unter Mikroskop etc.)
- Möglichkeit zur tangentialen Flusseinleitung (bezogen auf die Schwingquarzoberfläche) in die Messkammer = geringerer Einfluss bei Variation der Fließparameter, kein "Abspülen" der bio!. Schicht
- gleichmäßige Verteilung des Analyten über der Schwingquarzoberfläche (radial unterschiedliche Sensitivität)
- Möglichkeit zur biologischen bzw. chemischen Beschichtung einer Schwingquarzoberfläche in und außerhalb der Messkammer (Schwingquarzhalterung aus biokompatiblen Werkstoffen, insbesondere Klebstoffen, die möglichst inert sind und damit keine Anlagerung von unspezifischen chemischen und biologischen Substanzen erlauben)

Anders als bei den obig aufgeführten bekannten Halterungssystemen wird bei der beschriebenen Erfindung auf den Rand der zu benetzenden Schwingquarzoberfläche ein mit Klebstoff beschichteter Folienring, der einen größeren Außendurchmesser als der Schwingquarz besitzt, aufgebracht und dadurch die obere Stirnfläche abgedichtet.

Dabei wird der Innendurchmesser des Folienrings so gewählt, dass nur der mit einer sehr kleinen Amplitude schwingende Außenbereich der oberen Stirnfläche des Schwingquarzes mit der Folie bedeckt wird. Der über den Schwingquarz hinausragende Teil des Folienringes wird auf einen Kunststoffring (Halterungsring) aufgeklebt. Das Aushärten des Klebstoffes erfolgt z. B. durch kurzes Erwärmen der Folie, z. B. durch eine Lötspitze oder Heizplatte.

Zwischen dem Schwingquarz und dem ihn umgebenden Kunststoffring befindet sich ein ausreichend großer Spalt, so dass der Schwingquarz im Prinzip freischwebend, gehalten durch die Folie, in die Schwingquarzhalterung montiert wird und deshalb durch das Montieren nicht mechanisch verspannt wird, da die Folie einen relativ hohen Dehnungskoeffizienten besitzt.

Die elektrische Kontaktierung erfolgt an der unteren Stirnfläche des Schwingquarzes, indem man den in die Schwingquarzhalterung eingebauten Schwingquarz auf einen zweiten Kunststoffring, den sogenannten Kontaktierungsring legt, an dessen Oberfläche zwei metallische Elektroden aufgebracht sind.

Dieser Kontaktierungsring besitzt einen kleineren Außendurchmesser als der Innendurchmesser des Halterungsrings und eine um die Schwingquarzdicke kleinere Höhe. Dadurch werden die Kontaktpads auf der unteren Stirnfläche genau oberhalb der Elektroden des Kontaktierungsrings positioniert.

Wird auf den Halterungsring und den äußeren Teil des Kontaktierungsrings eine Kraft ausgeübt, z. B. über den Dichtungsring einer speziell ausgelegten Messkammer, so wird der Schwingquarz durch die elastischen Eigenschaften der Folie exakt definiert auf den Kontaktierungsring gedrückt und eine sehr gute elektrische Kontaktierung erreicht, ohne den Schwingquarz mechanisch zu verspannen.

Der Innendurchmesser des Kontaktierungsrings ist so gewählt, dass nur die Randbereiche der unteren Stirnfläche, die mit einer sehr kleinen Amplitude schwingen, aufliegen und die Scherschwingung des Schwingquarzes deshalb durch den Kontaktierungsring nur sehr gering gedämpft wird.

Bei einer entsprechenden Auslegung der zur Erfindung gehörenden Messkammer ist es durch das beschriebene Halterungssystem möglich, die Messkammer oberhalb des Schwingquarzes durch einen Schnellverschluss, z. B. einen Bajonettverschluss, flüssigkeitsdicht anzupressen, ohne den Schwingquarz entscheidend mechanisch zu verspannen oder nach einem Ein- und Ausbau unterschiedlich mechanisch zu verspannen. Da die Folie eine nur sehr geringe Dicke < 0,1 mm besitzt und damit keine große Flussbarriere darstellt, kann der Fluss bei entsprechender Geometrie der Messkammer tangential eingeleitet werden. Es ist durch dieses Halterungssystem möglich, die Flüssigkeitszuleitungen außerhalb des optischen Fensters zu platzieren, welches eine optische Beobachtung der Schwingquarzoberfläche während einer Messung bzw. Injektion einer Flüssigkeit etc. bei gleichzeitiger tangentialer Flusseinleitung erst ermöglicht. Außerdem ist es durch diese Anordnung möglich, die Höhe des optisch durchlässigen Stempels und damit das Messkammervolumen über eine Justierschraube exakt auf unterschiedliche Werte einzustellen. Eine Thermostatisierung kann z. B. durch ein Peltier-System von unten erfolgen, ohne den optischen Zugang zu behindern.

Während der Messung ist die Schwingquarzoberfläche trotz tangentialer Flusseinleitung optisch zugänglich. Dadurch kann die Ankopplung von Analyt auf der Schwingquarzoberfläche, der Einschluss von Luftbläschen und der Befüllungsvorgang beobachtet werden, welches neben den wissenschaftlichen Vorteilen eine Prozessüberwachung für eine automatisierte Messung ermöglicht.
- Durch das beschriebene Schwingquarzhalterungsprinzip ist es möglich, die obere Stirnfläche des Schwingquarzes zuverlässig abzudichten. Weiterhin wird die benetzte Oberfläche auch bei einem Ein- und Ausbau des Schwingquarzes exakt definiert und es treten im Gegensatz zu den bisherigen Systemen auch bei tangentialer Flusseinleitung keine Flussbarrieren auf. Dadurch können auch z. B. "schwere" Partikel bzw. "groß" menschliche Zellen nach einer Messung wieder aus der Messkammer entfernt werden. Dies macht die Analyse, z. B. von menschlichem Vollblut erst möglich.
- Das Messkammervolumen ist justierbar.
- Biokompatibilität ist gewährleistet.
- Gute Handhabung des Schwingquarzes außerhalb der Messkammer (Schwingquarzoberfläche ist für eine biologische Beschichtung sehr gut zugänglich. Der in die Schwingquarzhalterung eingebaute Schwingquarz kann mit einer Pinzette am äußeren Halterungsring gehalten bzw. aus- und eingebaut werden, ohne den Schwingquarz durch zu hohe mechanische Spannung zu zerstören oder die biologische Beschichtung zu zerstören.)
- Das Anbringen der Messkammer mit gleichzeitiger elektrischer Kontaktierung kann über einen Schnellverschluss ohne Beeinflussung der Schwingquarzparameter erfolgen. Dies ist die Voraussetzung für einen schnellen Zugang zum Schwingquarz während einer Messung und damit für die Charakterisierung der Schwingquarzoberfläche mit anderen Methoden (Lichtmikroskopie, Rasterkraftmikroskopie etc.), um Zwischenergebnisse zu verifizieren. Weiterhin benötigt der durch den Schnellverschluss um einiges vereinfachte Einbau des Schwingquarzes in die Messkammer kein Fachpersonal und eine automatische Anbringung der Messkammer ist aufgrund der Einfachheit denkbar.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch eine Messkammer nach einem Ausführungsbeispiel der Erfindung
- Figur 2:: ein vergrößerter Teilschnitt durch die Messkammer nach Figur 1
- Figur 3:: ein Funktionsbild mit Darstellung der Anlagerung an die Messoberfläche
- Figur 4:: eine Darstellung wie Figur 3
- Figur 5:: eine gleiche Darstellung wie Figur 4
- Figur 6:: schematisiert das Schwingverhalten der Untersuchungssubstanz auf der Messoberfläche des Resonators
- Figur 7:: die Messkammer in Seitenansicht
- Figur 8:: ein Schnitt durch die Messkammer gemäß der Schnittrichtung BB in Figur 9
- Figur 9:: die Draufsicht auf die Messkammer
- Figur 10:: Schnitt gemäß der Linie A-A in Figur 7
- Figur 11:: die perspektivische Seitenansicht der Messkammer
- Figur 12:: die perspektivische Ansicht einer Sensoreinheit mit einer dort montierten Messkammer und einem zweiten Aufnahmeplatz zur Anordnung einer zweiten Messkammer

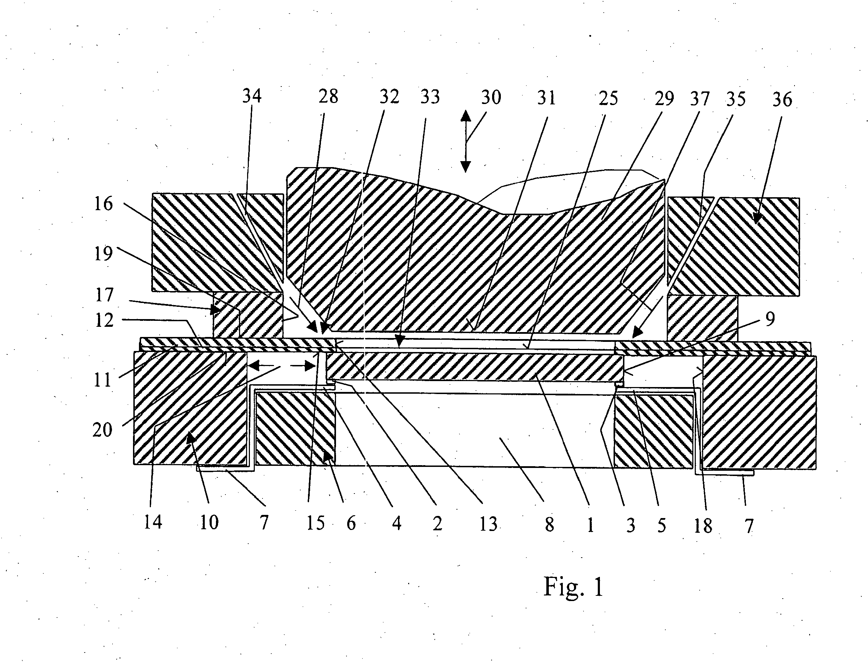

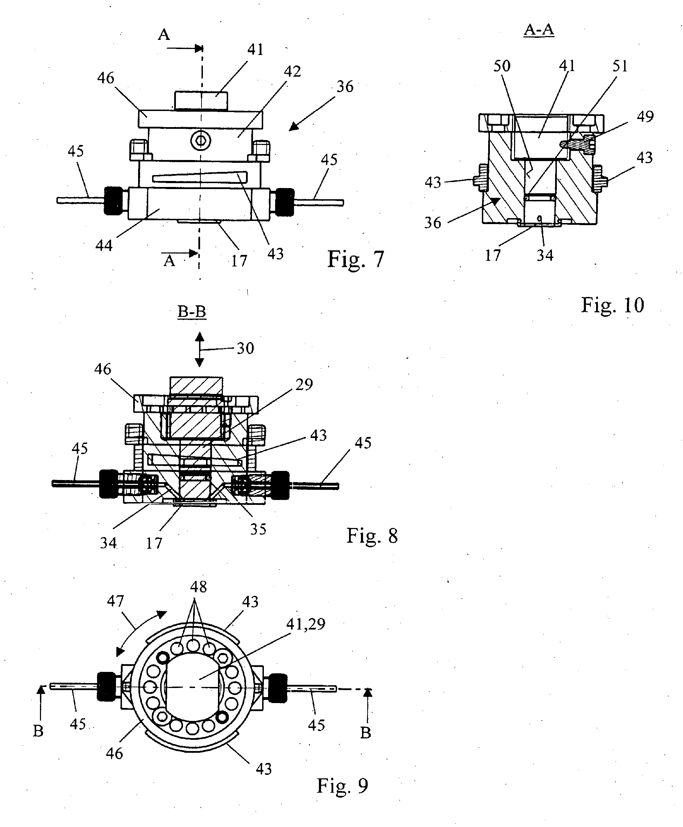

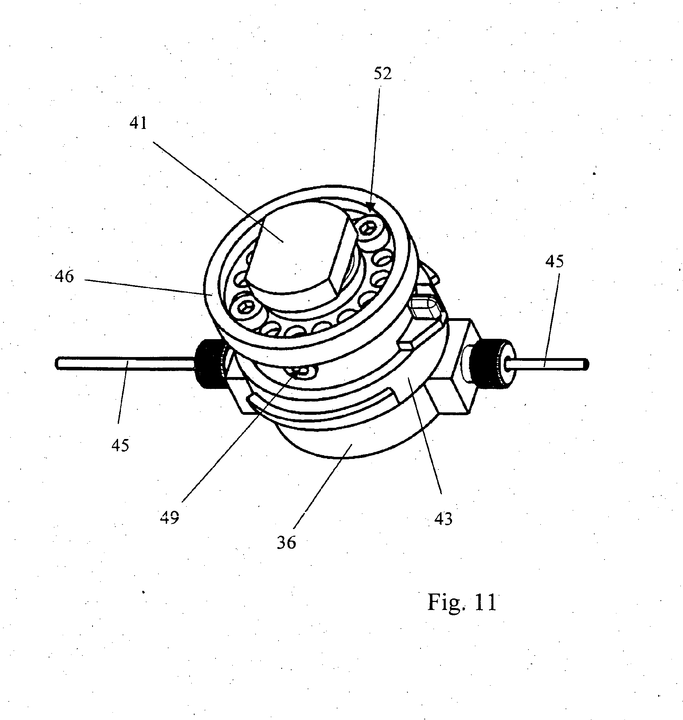

In Figur 1 ist schematisiert und vergrößert der untere Teil einer Messkammer 36 nach den Figuren 7 bis 11 und eine Messvorrichtung dargestellt, die abdichtend mit dem unteren Teil der Messkammer 36 verbunden ist.

Der Aufbau der Messvorrichtung wird nachfolgend beschrieben.

Ein scheibenförmiger Resonator 1 (der z. B. die Größe eines 1-cent-Stückes hat) ist als scheibenförmiger Schwingkörper in einer erfindungsgemäßen Halterung gelagert.

Zu diesem Zweck hat der Resonator an einander gegenüberliegenden Stellen am Außenumfang außen zwei einander gegenüberliegende Kontaktflächen 2, 3, die sehr dünn ausgebildet sind und im Ausführungsbeispiel nach Figur 1 mit übertriebener Dicke dargestellt sind.

In Wirklichkeit sind diese Kontaktflächen 2, 3 im wesentlichen flächenbündig mit der Unterseite des Resonators 1 verbunden.

Der Resonator 1 liegt mit seinen Kontaktflächen 2, 3 mit einem genau definierten Kontaktdruck auf den dort gegenüberliegend angeordneten Kontaktflächen 4, 5 eines Kontaktierungsringes 6 auf.

Der Kontaktierungsring 6 ist bevorzugt aus einem elektrisch isolierenden Material ausgebildet, und die Kontaktflächen 4, 5 sind lediglich als Leitsilberbahnen oder dergleichen ausgebildet.

Es sind daher einander gegenüberliegende und elektrisch voneinander isolierte Kontaktflächen 4, 5 auf dem Kontaktierungsring 6 vorhanden, die mit den Kontaktflächen 2, 3 des Resonators 1 elektrisch leitfähig verbunden sind.

Die Stromzuführungen 7 dieser Kontaktflächen 4, 5 sind an den Ausgang einer Oszillatorschaltung angeschlossen, wobei die elektrische Schwingfrequenz der Oszillatorschaltung der mechanischen Schwingung des Resonators nachgeführt wird.

Selbstverständlich ist die erläuterte Anschaltung an einer Oszillatorschaltung nur beispielhaft zu verstehen. Es können selbstverständlich auch andere Messvorrichtungen verwendet werden, wie z. B. eine Impedanzmessung oder die Anregung mit Hilfe eines Signalgenerators, der ein genau definiertes Signal an den Resonator 1 abgibt.

Der Resonator 1 liegt somit völlig frei über einem Hohlraum 8, der im Innenraum des scheibenförmigen Kontaktierungsringes 6 gebildet ist.

Wichtig ist nun, dass auf den Außendurchmesser 9 des Resonators 1 eine Klebefolie befestigt ist, die im gezeigten Ausführungsbeispiel als Folienring 11 ausgebildet ist.

Der Folienring 11 ist in Verbindung mit seiner Klebebeschichtung in stark übertriebenen Größenverhältnissen in Figur 1 und den nachfolgenden Figuren dargestellt, um den Zusammenhang besser erläutern zu können.

In Wirklichkeit ist er um ein Vielfaches dünner als die Dicke des Resonators. Wenn man von einer Resonatordicke von beispielsweise 2/10 mm bei einem Resonator mit einer Schwingfrequenz von 10 MHz ausgeht, liegt die Foliendicke im Bereich von 50 bis 200 µm.

Selbstverständlich sind auch andere und auch größere Dicken möglich, denn der Kern der Erfindung liegt in der möglichst dämpfungsarmen und verspannungsfreien Lagerung des Resonators 1 im Befestigungsbereich zwischen seinem Außendurchmesser 9 und dem zugeordneten Innendurchmesser des Folienringes 11.

Statt des hier dargestellten Folienrings mit einer unteren Klebefläche 12 können deshalb auch andere, gegossene, gezogene oder gespritzte Ringe verwendet werden. Wichtig ist jedoch, dass der Folienring 11 oder ein äquivalentes Material ein elastomeres Verhalten aufweist.

Neben der dämpfungsarmen Halterung durch einen Folienring ist wesentlich für die erfindungsgemäße Halterung auch, dass es eine genau konstante und gleichbleibende verspannungsfreie Halterung ist, die von Außeneinflüssen, insbesondere von einer Dichtungsanordnung, wie sie nachfolgend mit den Ringen 17 und 10 beschrieben wird, unabhängig ist.

Wichtig hierbei ist, dass sich nun der Folienring 11 radial auswärts von dem Außendurchmesser 9 des Resonators nach außen erstreckt und sich hierbei ein freier Abstand 14 ergibt; der den Resonator 1 praktisch frei schwebend ausbildet.

Hierbei übergreift der Innendurchmesser 13 des Folienrings den Außendurchmesser des Resonators 1 nur um ein geringes Maß von z. B. 2/10 mm, so dass damit sichergestellt ist, dass schwingende Anteile des Resonators 1 nicht in diese Halterung mit einbezogen sind.

Wichtig ist ferner, dass nun der Folienring 11 in radialem Abstand auswärts von dem Außendurchmesser des Resonators 1 in zwei einander gegenüberliegenden Flächen gehalten ist, wobei eine der Flächen als Dichtungsstelle dient.

Die Dichtungsstelle wird durch einen ringsumlaufenden Dichtungsring 17 gebildet, der an der Unterseite der Messkammer 36 angeordnet ist, während der gegenüberliegende Teil durch einen Halterungsring 10 gebildet ist, der aus einem formstabilen Material, wie z. B. Polypropylen, PPE oder dergleichen, besteht. Dieser Halterungsring 10 bildet die Gegenfläche für den oberen, gegenüberliegenden Dichtungsring 17 und seine Ausbildung kann in weiten Grenzen verändert werden. Er kann sogar als Metallring ausgebildet sein.

Wichtig hierbei ist, dass der Innendurchmesser 18 des Halterungsrings 10 nun den Außendurchmesser des Kontaktierungsrings 6 übergreift, so dass damit eine einwandfreie Zentrierung des Halterungsringes 10 auf dem Kontaktierungsring 6 gewährleistet ist.

Durch diese außenliegende Zentrierung wird gleichzeitig sichergestellt, dass auch der im Bereich des Folienringes 11 angeklebte Resonator 1 genau zentrisch in dem Messraum 33 der Messkammer 36 zentriert angeordnet ist.

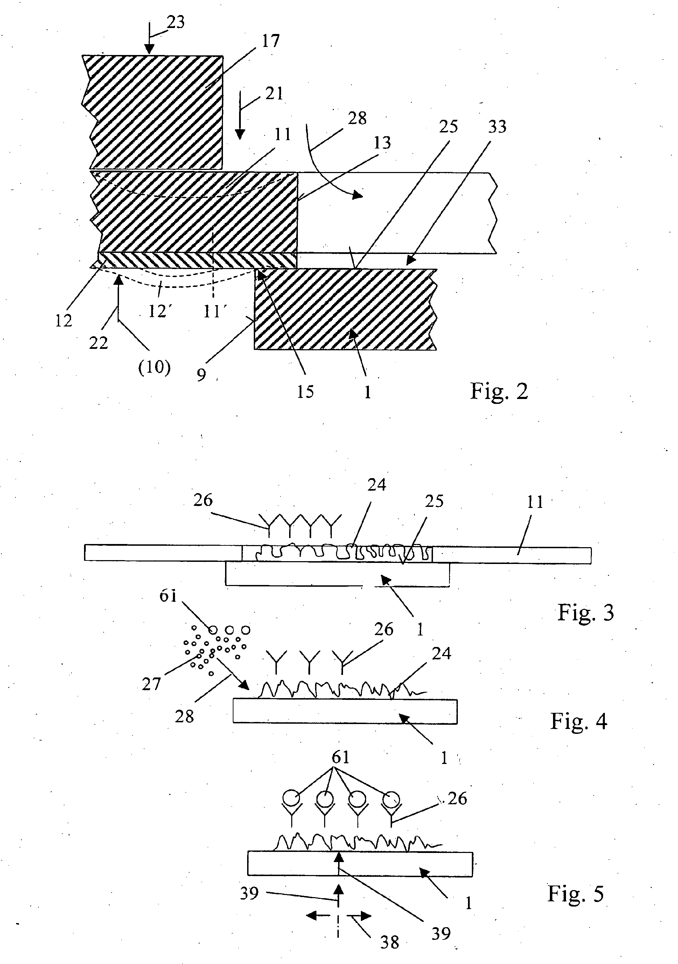

Die Figur 2 zeigt in vergrößertem Maßstab die besondere Dichtungswirkung des Folienringes 11 in Verbindung mit dem Resonator 1.

Hierbei ist erkennbar, dass, wenn ein entsprechender Anpressdruck von Seiten der Messkammer in Pfeilrichtung 23 auf den oberen Dichtungsring 17 erzeugt wird, dieser Pressdruck in Pfeilrichtung 21 nach unten weitergeleitet wird und hierbei nicht (!) auf den Resonator 1 wirkt, sondern von dem Halterungsring aufgenommen wird. Eine durch die Folieneigenschaften exakt definierte Krafteinleitung auf den Resonator erfolgt lediglich durch die geringfügige gestrichelt eingezeichnete Verformung des Folienrings 11, wobei sich auch die Klebefläche 12 in Richtung der gestrichelt eingezeichneten Klebefläche 12' verformt. Dadurch legt sich der Folienring mit seinem inneren Umfang über die Oberkante 15 am Außenumfang des Resonators 1 herum und ergibt dort eine besonders günstige und zuverlässige Abdichtung.

Somit ist klar, dass wegen der geringen Dicke des Folienringes 11 (der übertrieben dick in Figur 2 dargestellt ist) praktisch eine verlustfreie, tangentiale Anströmung in Pfeilrichtung 28 auf die Messoberfläche 25 gewährleistet ist.

Der Anpressdruck oder der Dichtungsdruck wird also in Pfeilrichtung 21 nach unten über den sich nur geringfügig verformenden Folienring 11 weitergegeben und auf die gegenüberliegende feste Anlagefläche oder Gegenfläche eingeleitet, die durch den Halterungsring 10 gegeben ist und die lediglich als Pfeilrichtung 22 in Figur 2 symbolisch dargestellt ist.

Dies bedeutet, dass unabhängig von der Stärke der Anpresskraft immer diese Anpresskraft in Pfeilrichtung 21 und die entsprechende Gegenkraft in Pfeilrichtung 22 entsteht und hierbei eine Einleitung auf den Resonator 1 mit Sicherheit Anpresskraft unabhängig ist.

Die Einleitung oder die Überleitung von einer Kraft in Pfeilrichtung 21 auf den Resonator erfolgt nur über die geringfügige Verformung der Folie und ist damit exakt über die Folieneigenschaften des Folienringes 11 definiert.

Die Dichtung erfolgt deshalb nicht nur im Bereich der Oberkante 15, sondern im Bereich der Klebefläche 12, nämlich im Überlappungsbereich, wo der Folienring 11 mit seinem Innendurchmesser 13 den Außendurchmesser des Resonators 1 übergreift und dort haltert Die Dichtung erfolgt durch die Verklebung der Folie mit dem Schwingquarz.

Die Erfindung ist jedoch nicht auf diese Klebehalterung beschränkt. In einer anderen Ausführung wird für die Halterung eine festere Folie verwendet, die durch den bloßen Druck von oben auf den Resonator die Abdichtung schaffen. Hierbei ist auch wesentlich, dass der Innendurchmesser 16 des oberen Dichtungsringes 17 nicht auf dem Resonator 1 angreift - wie es in nachteiliger Weise zum Stand der Technik gehört - sondern dass er auf dem äußeren Folienabschnitt des Folienringes 11 aufliegt.

Die Dichtfläche zwischen dem oberen Dichtungsring 17 wird also im Bereich der Dichtungsfläche 19 und im Bereich des unteren Halterungsringes 10 im Bereich der Auflagefläche 20 hergestellt. Diese beiden Auflageflächen sind unabhängig vom Dichtungsdruck immer gleich belastet, und dieser Anpressdruck wird nicht-wie vorstehend beschrieben - auf den Resonator 1 eingeleitet.

In Verbindung mit den Figuren 3 bis 5 wird nun die Funktion der Messkammer 36 näher erläutert.

Hierbei sind in außenliegenden Bereichen jeweils schräg in den Messraum 33 hineingeführte Kanäle 34, 35 vorhanden, wobei beilspielsweise die zu untersuchende Substanz über den Kanal 34 in Pfeilrichtung 28 in den Einströmraum 32 einströmt, der ein möglichst kleines Volumen hat und der flüssigkeitsleitend mit dem eigentlichen Messraum 33 verbunden ist.

Nach der tangentialen Überströmung der Messoberfläche 25 des Resonators 1 in Pfeilrichtung 28 strömt das untersuchte Substrat wieder in Pfeilrichtung 37 aus dem dort dargestellten Ausströmräum in den Kanal 35 der Messkammer und wird dort abgeführt.

Wichtig ist, dass die obere Begrenzung des Messraumes 33 durch ein vertikal verstellbares optisches Fenster 29 gebildet ist, so dass von oben durch das optische Fenster 29 jederzeit die Art und das Aussehen der Messoberfläche 25 kontrolliert werden kann.

Die Höheneinstellbarkeit ist hierbei in Pfeilrichtung 30 in Figur 1 symbolisiert dargestellt.

Die Stirnfläche 31 des optischen Fensters 29 bildet also einen höheneinstellbaren Abstand zu der Messoberfläche 25 des Resonators 1.

Selbstverständlich ist die Erfindung nicht auf ein schräges Einführen durch schräg angestellte Kanäle 34, 35 von Substanzen in den Messraum 33 beschränkt. Es kann auch vorgesehen sein, dass die Kanäle 34, 35 genau parallel zur Messoberfläche 25 des Resonators 1 in der Messkammer 36 geführt sind.

Vorteil des verwendeten, dünnen Folienrings 11 ist nämlich, dass auch eine tangentiale Einleitung überhaupt möglich ist, weil keine störenden Vorsprünge in tangentialer Richtung über der Messoberfläche 25 des Resonators 1 gegeben sind.

Anhand der Figuren 3 bis 5 wird beispielhaft die Untersuchung von Blutgruppen an einer Vollblutprobe näher erläutert.

Zur Vorbereitung wird gemäß Figur 3 zunächst die Messoberfläche 25 des Resonators 1 mit einer Protein-Beschichtung 24 (z. B. Protein A) versehen. Es handelt sich um einen dünnen, schlierenförmigen Auftrag.

Sonach werden dann IgG-Antikörper 26 auf die Protein-Beschichtung 24 immobilisiert.

Auf die so hergestellte und beschichtete Messoberfläche 25 wird nun gemäß Figur 4 in Pfeilrichtung 28 Vollblut 27 aufgegeben, wobei gemäß Figur 5 die im Vollblut enthaltenen Erythrozyten 61 enthalten sind.

Entsprechend einer Immunoreaktion werden die Erythrozyten 61 an die IgG-Antikörper26 gebunden. gebunden.

Während dieser Zeit wird der Resonator 1 mit einer elektrischen Wechselspannung angeregt. Es bildet sich im innern des Resonators eine stehende Transversalwelle aus, die sich in senkrechter Richtung (Pfeilrichtung 39) nach oben in die Substanz 24 hinein fortpflanzt. Die beiden Stirnflächen 25 des Resonators führen deshalb eine Scherschwingung aus, die schematisch durch die Pfeilrichtungen 38 dargestellt ist.

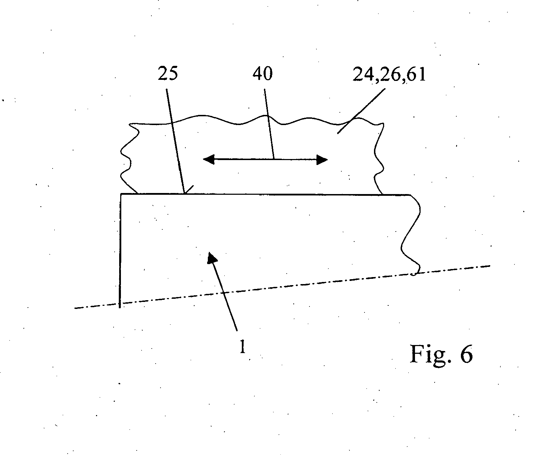

Diese Verhältnisse sind in Figur 6 näher dargestellt.

Hierbei ist erkennbar, dass in der zu untersuchenden Substanz 24, 26, 61 nun Scherschwingungen in den Pfeilrichtungen 40 erzeugt werden, welche die Substanz zum Mitschwingen anregen.

Entsprechend der Massenbeladung und Dämpfung der Messoberfläche 25 ändert sich die mechanische Resonanzfrequenz oder/und die Schwingungsamplitude des Resonators 1. Die Frequenz der elektrischen Wechselspannung wird durch die den Resonator 1 versorgende Oszillatorschaltung der mechanischen Resonanzfrequenz nachgeführt. Die Frequenzänderung der elektrischen Wechselspannung kann durch einen Frequenzzähler erfasst werden und dient als Maß für die Änderung der Massenbeladung der Messoberfläche 25 des Resonators 1.

Durch die Messung der elektrischen Impedanz kann die Dämpfung, hervorgerufen durch die angelagerte Schicht, gemessen werden.

In den Figuren 7 bis 11 ist der Aufbau einer Messkammer 36 näher dargestellt.

Die Messkammer 36 besteht im wesentlichen aus einem Metall- oder Kunststoffgehäuse 42, welches eine mittlere, zentrale Ausnehmung definiert, in welche der Sichtstempel 41 aus einem durchsichtigen Kunststoffmaterial (oder aus Glas) höheneinstellbar eingesetzt ist.

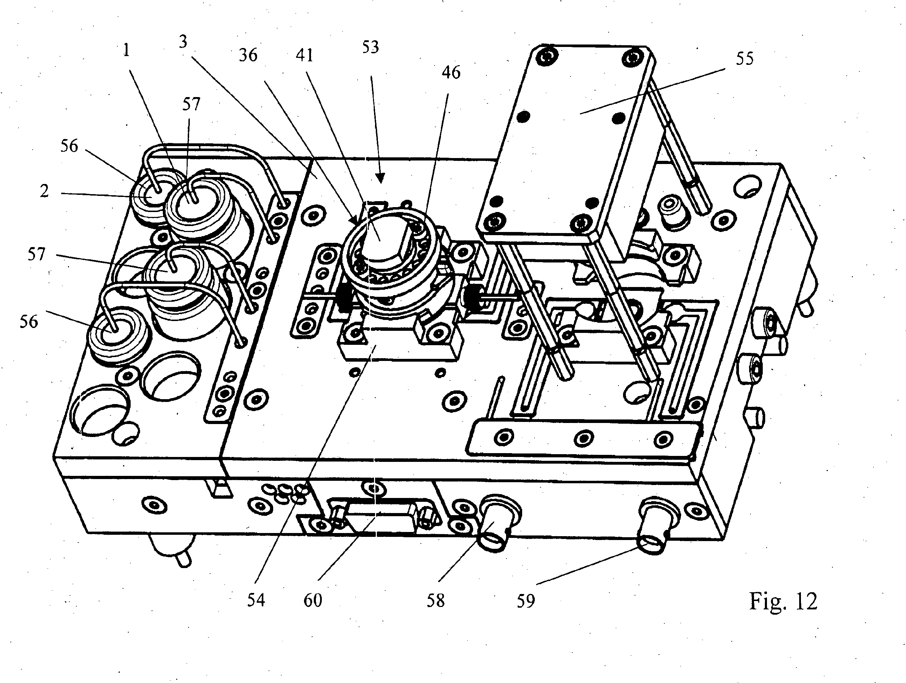

Das Gehäuse 42 wird mit Hilfe einer beliebigen Schnellverschraubung (z. B. einem Bajonettverschluss) auf einem nicht näher dargestellten Unterteil festgeschraubt, welches beispielsweise mit Bezugszeichen 54 als Halterung in Figur 12 dargestellt ist.

Die Bajonettflansche 43 greifen also in zugeordnete Aufnahmeflansche an der Halterung 54 gemäß Figur 12 ein und werden dort festgelegt.

An der unteren Stirnseite des Gehäuses 42 ist hierbei der vorher erwähnte Dichtungsring 17 angeordnet, der die Abdichtung zu der Messvorrichtung herstellt.

Das Gehäuse ist im wesentlichen zweistufig ausgebildet und besteht aus einem oberen Teil mit einem kleineren Durchmesser, der werkstoffeinstückig in ein Gehäuseunterteil 44 größeren Durchmessers übergeht.

In dieses Gehäuseunterteil 44 münden die Anschlussschläuche 45 für die Einleitung und Ableitung der zu untersuchenden Substanz.

Zur Höheneinstellung des Sichtstempels 41 ist ein Justierrad 46 vorgesehen, welches mit einem nicht näher dargestellten Gewinde am Gehäuse 42 zusammenwirkt.

Durch Verdrehung des Justierrades 46 in den Drehrichtungen 47 wird somit der Sichtstempel 41 in vertikaler Richtung nach oben und nach unten verstellt. Er wird mit Hilfe einer Feststellschraube 49 drehfest festgelegt, um so die Höhe des Messraumes 33 einzustellen.

Der Sichtstempel 41 bildet an seiner oberen Stirnseite ein Anzeigefenster 48, durch das hindurch die Oberfläche des Resonators 1 beobachtet werden kann.

Das Justierrad 46 weist eine Reihe von ringsumlaufenden, einen gegenseitigen Abstand voneinander einnehmenden Anzeigefenstern 48 auf, so dass die Verdrehung des Justierrades 46 erkennbar mit einer gegenüberliegenden Messmarke einstellbar ist und mit Hilfe einer Fixierschraube 52 festgelegt wird.

Zusätzlich wird eine Drehungssicherung des Sichtstempels durch eine Feststellschraube 49 erreicht, welche sich am Außenumfang des zylinderförmigen Sichtstempels 41 klemmend anlegt.

In Figur 10 ist noch dargestellt, dass der Sichtstempel 41 mit Hilfe einer oder mehrerer O-Ring-Dichtungen 51 abgedichtet in der zentrischen Mittenaufnahme 50 geführt ist.

In Figur 12 ist eine vollständige Sensoreinheit 53 dargestellt, wobei zwei nebeneinander liegende Messkammern 36 vorhanden sind. Die eine Messkammer 36 ist vollbestückt und über dem Ort der anderen Messkammer ist lediglich eine Halterung 55 für eine CCD-Kamera angeordnet, während die dort befindliche Messkammer selbst entnommen ist.

Diese beiden Messkammern 36, 36' können in Serie oder parallel zueinander betrieben werden.

Zu diesem Zweck sind in der Sensoreinheit 53 eine Reihe von Analytgefäßen 56 angeordnet, denen Puffergefäße 57 zugeordnet sind.

Die entsprechende Untersuchungsflüssigkeit wird also aus den Analytgefäßen 56 entnommen und gegebenenfalls mit einer vor- oder nachlaufenden

Pufferflüssigkeit aus den Puffergefäßen 57 in dem Rohrleitungssystem verschoben.

An der Sensoreinheit 53 sind noch verschiedene elektrische Anschlüsse angeordnet. Der Anschluss 58 ist der Ausgang der in der Sensoreinheit 53 angeordneten Oszillatorschaltung, und der Anschluss 59 dient zum Anschluss eines Impedanzmessgerätes.

Über den Anschluss 60 (der als Mehrkanalanschluss ausgebildet ist) werden verschiedene elektrische Signale und im übrigen auch die Stromversorgung zugeführt.

Im Innenraum der Sensoreinheit 53 ist mit Hilfe von Peltier-Elementen eine absolut temperaturstabile Umgebung hergestellt, so dass die ganze Sensoreinheit 53 zusammen mit den dort angeordneten Messkammern 36 auf einen relativ geringen Temperaturbereich von zum Beispiel ± 0,06 °C stabil geregelt ist.

Es kann zusätzlich noch vorgesehen sein, dass unterhalb der Sensoreinheit 53 ein thermostatisiertes Wasserbad angeordnet ist, durch welches die Analyt-Flüssigkeiten geschleust werden, bevor sie in die Messkammern 36 injiziert werden.

**Zeichnungslegende**

| | | | |
|---|---|---|---|
| 1 | Resonator | 28 | Pfeilrichtung |
| 2 | Kontaktfläche | 29 | Optisches Fenster |
| 3 | Kontaktfläche | 30 | Pfeilrichtung |
| 4 | Kontaktfläche | 31 | Stirnfläche |
| 5 | Kontaktfläche | 32 | Einströmraum |
| 6 | Kontaktierungsring | 33 | Messraum |
| 7 | Stromzuführung | 34 | Kanal |
| 8 | Hohlraum | 35 | Kanal |
| 9 | Außendurchmesser (Resonator 1) | 36 | Messkammer |
| | | 37 | Pfeilrichtung |
| 10 | Halterungsring | 38 | Pfeilrichtung |
| 11 | Folienring 11' | 39 | Pfeilrichtung |
| 12 | Klebefläche 12' | 40 | Pfeilrichtung |
| 13 | Innendurchmesser (Folie 11) | 41 | Sichtstempel |
| | | 42 | Gehäuse |
| 14 | Abstand | 43 | Bajonettflansch |
| 15 | Oberkante (Resonator 1) | 44 | Gehäuseunterteil |
| 16 | Innendurchmesser | 45 | Anschlussschlauch |
| 17 | Dichtungsring | 46 | Justierrad |
| 18 | Innendurchmesser (Halterungsring 10) | 47 | Drehrichtung |
| | | 48 | Anzeigefenster (Fixierung) |
| 19 | Dichtfläche (Dichtungsring 17) | 49 | Feststellschraube |
| | | 50 | Aufnahme |
| 20 | Halterungsfläche (Halterungsring 10) | 51 | O-Ring-Dichtung |
| | | 52 | Fixierschraube |
| 21 | Pfeilrichtung | 53 | Sensoreinheit |
| 22 | Pfeilrichtung | 54 | Halterung |
| 23 | Pfeilrichtung | 55 | Halterung für CCD-Kamera |
| 24 | Protein-Beschichtung | 56 | Analytgefäße |
| 25 | Messoberfläche | 57 | Puffergefäße |
| 26 | IgG-Antikörper | 58 | Anschluss (Oszillator) |
| 27 | Vollblut | 59 | Anschluss (Impedanz) |
| 60 | Anschluss | 61 | Erythrozyten |

## Patentansprüche

1. Vorrichtung aus einer Messkammer und einen über einen Schnellverschluss in die Messkammer integrierten Resonator (1) für die Flüssigkeitssensorik und zum Nachweis bzw. Messung der Konzentration von Stoffen, Substanzen und/oder Mikroorganismen in Flüssigkeiten, welche folgendes aufweist
a. ein Gehäuse (42) aus zwei festlegbaren Gehäuseteilen;
b. einen Resonator (1), der mit der zu untersuchenden Flüssigkeit in Kontakt ist und auf eine Massenanlagerung des nachzuweisenden Stoffes, der Substanz, Partikel und/oder Mikroorganismen durch Änderung seiner Resonanzfrequenz oder/und Dämpfung anspricht;
c. eine zwischen dem Gehäuse (42) und dem Resonator (1) angeordnete Dichtungseinrichtung mit einem Dichtungsring (17), die mit ihren
d. Anlageflächen gegen weitere Teile (36,11,11") der Vorrichtung anliegt, **dadurch gekennzeichnet, dass**
e. der Resonator (1) lediglich an seinem Außenumfang von einem dünnen elastomeren Ring gehalten und abgedichtet ist und dass im radialen Abstand vom Außendurchmesser (9) des Resonators (1) der elastomere Ring (11) einerseits abdichtend an einem oberen Dichtungsring (17) der Messkammer (36) anliegt und andererseits auf einem Halterungsring (10) aufliegt wobei der Resonator (1) auf einem Kontaktierungsring (6) aufliegt und der Resonator (1) durch den elastomeren Ring (11) exakt definiert auf den Kontaktierungsring (6) gedrückt wird, indem eine Kraft auf den elastomeren Ring (11) ausgeübt wird.

2. Vorrichtung nach Anspruch 1, **dadurch gekennzeichnet, dass** der Resonator (1) als scheibenförmiger Schwingkörper ausgebildet ist welcher am Außenumfang zwei gegenüberliegende Kontaktflächen (2, 3) aufweist, die im wesentlichen flächenbündig mit der Unterseite des Resonators (1) verbunden sind.

3. Vorrichtung nach einem der vorhergehenden Ansprüche, **dadurch gekennzeichnet, dass** die Kontaktflächen (2, 3) mit einem genau definierten Kontaktdruck auf den gegenüberliegend angeordneten Kontaktflächen (4, 5) eines Kontaktierungsringes (6) aufliegen, welcher vorzugsweise aus einem elektrisch isolierenden Material ausgebildet ist und eine elektrische Leitfähigkeit mit den Kontaktflächen (2, 3) des Resonators (1) ausbildet und

4. Vorrichtung nach einem der vorhergehenden Ansprüche, **dadurch gekennzeichnet, dass** die Kontaktflächen (4, 5) eine Stromzuführung (7) von zum Beispiel einem Ausgang einer Oszillatorschaltung aufweisen, wobei deren elektrische Schwingfrequenz der mechanischen Schwingung des Resonators (1) nachgeführt wird.

5. Vorrichtung nach einem der vorhergehenden Ansprüche, **dadurch gekennzeichnet, dass** der elastomere Ring als Folienring (11) ausgebildet ist der den Resonator (1) lediglich um ein geringes Maß mit seinem Innendurchmesser (13) übergreift und diesen an seinem Außenumfang hält, wodurch eine dämpfungsarme und verspannungsfreie Halterung und Abdichtung des Resonators (1) ausgebildet ist und einen Kontakt der schwingenden Anteile des Resonators (1) vermeidet

6. Vorrichtung nach einem der vorhergehenden Ansprüche, **dadurch gekennzeichnet, dass** im radialen Abstand von der Halterung am Resonator (1) außenliegend Flächen (19, 20) zwischen einander zugeordneten Dichtungsringen (10,17) gebildet sind, zwischen denen der elastomere Ring (11) aufgenommen ist

7. Vorrichtung nach einem der vorhergehenden Ansprüche, **dadurch gekennzeichnet, dass** obere und untere Dichtflächen zur Abdichtung zwischen der Messkammer (36) und der Messvorrichtung mit dem Resonator (1) radial auswärts im Abstand vom Außenumfang des Resonators (1) angeordnet sind.

8. Vorrichtung nach einem der vorhergehenden Ansprüche, **dadurch gekennzeichnet, dass** die obere Dichtungsstelle mittels dem ringsumlaufenden Dichtungsring (17) an der Unterseite der Messkammer (36) und die gegenüberliegende untere Halterungsfläche mittels einem Halterungsring (10) aus formstabilen Material gebildet ist, welcher eine Gegenfläche für den oberen, gegenüberliegenden Dichtungsring (17) ausbildet und im Abstand (14) zum Resonator (1) angeordnet ist, wodurch der Resonator (1) frei schwebend ausgebildet ist

9. Vorrichtung nach einem der vorhergehenden Ansprüche, **dadurch gekennzeichnet, dass** der Innendurchmesser (18) des Halterungsrings (10) den Außendurchmesser des Kontaktierungsrings (6) übergreift und eine einwandfreie Zentrierung des Halterungsringes (10) auf dem Kontaktierungsring (6) ausbildet, wobei der im Bereich des Folienringes (11) angeordnete Resonator (1) genau zentrisch in dem Messraum (33) der Messkammer (36) zentriert ist

10. Vorrichtung nach einem der vorhergehenden Ansprüche, **dadurch gekennzeichnet, dass** der den Resonator (1) haltende elastomere Ring (11) vorzugsweise eine Klebeschicht (12), eine obere/untere umlaufende Nut zur Aufnahme des Resonators (1) an seinem umlaufenden Außenumfang, oder einzeln voneinander am Umfang verteilt angeordnete Halterippen aufweist oder elektrostatisch ausgebildet ist wobei der elastomere Ring (11) der Umrissform des Resonators (1), wie zum Beispiel rund, rechteckig, viereckig, sechseckig, parallelogrammförmig oder dergleichen angepasst ist und seine Dicke um ein vielfaches dünner als die Dicke des Resonators (1) ausgebildet ist.

11. Vorrichtung nach einem der vorhergehenden Ansprüche, **dadurch gekennzeichnet, dass** ein erzeugter Anpressdruck in Pfeilrichtung (23) auf den oberen Dichtungsring (17) in Pfeilrichtung (21) nach unten auf die gegenüberliegende Anlagefläche oder Gegenfläche des Halterungsringes (10) geleitet wird und der Folienring (11) sich lediglich in Richtung der Verformung (11') verformt wobei sich die Klebefläche (12) in die Klebefläche (12") verformt und der Folienring (11) sich mit seinem inneren Umfang über die Oberkante (15) am Außenumfang des Resonators (1) herumlegt

12. Vorrichtung nach einem der vorhergehenden Ansprüche, **dadurch gekennzeichnet, dass** die Anpresskraft in Pfeilrichtung (21) eine Gegenkraft in Pfeilrichtung (22) erzeugt, wodurch eine Einleitung der Kraft auf den Resonator (1) vermieden wird,

13. Vorrichtung nach einem der vorhergehenden Ansprüche, **dadurch gekennzeichnet, dass** der Folienring (11) aufgrund seiner relativ geringen Dicke eine verlustfreie, tangentiale Anströmung in Pfeilrichtung (28) auf die Messoberfläche (25) gewährleistet.

14. Vorrichtung nach einem der vorhergehenden Ansprüche, **dadurch gekennzeichnet, dass** die Dichtfläche zwischen oberem Dichtungsring (17) im Bereich der Dichtungsfläche (19) und im Bereich des Halterungsringes (10) im Bereich der Dichtfläche (20) gebildet ist

15. Vorrichtung nach einem der vorhergehenden Ansprüche, **dadurch gekennzeichnet, dass** der elastomere Ring (11) mittels einem Besputterungsvorgang oder anderen Beschichtungsverfahren unmittelbar auf der Oberfläche des Resonators (1) angebracht ist, wodurch die Messkammer (36) vollkommen eben und kantenfrei mit diesem elastomeren Ring (11) ausgebildet ist und Ftussbarrieren vermeidet.

## Claims

1. Apparatus comprising a measurement chamber and a resonator (1), which can be integrated in the measurement chamber via a quick-acting closure, for the liquid sensor system and for detecting and/or measuring the concentration of materials, substances and/or microorganisms in liquids, which apparatus includes the following:
a. a housing (42) which consists of two housing parts that can be locked in position;
b. a resonator (1) which is in contact with the liquid to be examined and responds to a mass adsorption of the material, substance, particle and/or microorganisms to be detected by a change in its resonance frequency and/or its damping;
c. a sealing device including a sealing ring (17) disposed between said housing (42) and said resonator (1), which sealing device has its
d. contact surfaces abutting on further parts (36, 11, 11") of the device, **characterized in that**
e. said resonator (1) is retained along its outer circumference only, and sealed, by a thin elastomer ring, and that at a radial distance from the outer diameter (9) of the resonator (1), said elastomer ring (11) on the one hand rests on and thus seals an upper sealing ring (17) of said measurement chamber (36) and on the other hand rests on a retaining ring (10), with said resonator (1) resting on a contact ring (6) and said elastomer ring (11) pressing said resonator (1) onto said contact ring (6) in an exactly defined manner by exerting a force on said elastomer ring (11).

2. The apparatus of claim 1, **characterized in that** the resonator (1) is in the form of a disk-shaped oscillating body which has two opposing contact surfaces (2, 3) on its outer circumference that are connected to the underside of said resonator (1) in an essentially flush manner.

3. The apparatus of one of the preceding claims, **characterized in that** said contact surfaces (2, 3) bear on the oppositely arranged contact surfaces (4, 5) of a contact ring (6) with a precisely defined contact pressure, which contact ring (6) is preferably made of an electrically insulating material and provides an electrical conductivity to the contact surfaces (2, 3) of said resonator (1).

4. The apparatus of one of the preceding claims, **characterized in that** said contact surfaces (4, 5) include a current supply (7) from one output of an oscillator circuit, for example, with their electric resonance frequency following the mechanical vibration of the resonator (1).

5. The apparatus of one of the preceding claims, **characterized in that** said elastomer ring is in the form of a film ring (11) whose inner diameter (13) overlaps the resonator (1) by a small extent only and retains the resonator (1) on its outer circumference, thus providing a low-loss and stress-free support and seal for said resonator (1) and preventing the vibrating components of the resonator (1) from making contact.

6. The apparatus of one of the preceding claims, **characterized in that** surfaces (19, 20) are formed externally and radially spaced from the support on the resonator (1) which accommodate the elastomer ring (11) between them.

7. The apparatus of one of the preceding claims, **characterized in that** the upper and lower sealing surfaces are provided for sealing between the measurement chamber (36) and the measuring apparatus with the resonator (1), which sealing surfaces are disposed radially outward and spaced from the outer circumference of the resonator (1).

8. The apparatus of one of the preceding claims, **characterized in that** the upper sealing site is formed by the all-round sealing ring (17) on the underside of the measurement chamber (36), and the opposing lower support surface is formed by a retaining ring (10) made of an inherently stable material which provides a counterface for the upper opposing sealing ring (17) and is disposed at a distance (14) from said resonator (1), thus giving the resonator (1) a levitating design.

9. The apparatus of one of the preceding claims, **characterized in that** the inner diameter (18) of the retaining ring (10) overlaps the outer diameter of said contact ring (6) and thus perfectly centers the retaining ring (10) on said contact ring (6), with the resonator (1) disposed in the area of the film ring (11) being precisely centered within the measurement space (33) of said measurement chamber (36).

10. The apparatus of one of the preceding claims, **characterized in that** the elastomer ring (11) which retains the resonator (1) preferably includes an adhesive layer (12), an upper/lower all-round groove for accommodating said resonator (1) all along its outer circumference, or support ribs which are individually formed on and disposed along its circumference, or is electrostatic, said elastomer ring (11) being adapted to the outlines of the resonator (1), which may be circular, rectangular, square, hexagonal, rhomboid or the like, and that its thickness is many times thinner than that of the resonator (1).

11. The apparatus of one of the preceding claims, **characterized in that** a contact pressure is generated and directed onto the upper sealing ring (17) in the direction of arrow (23), downward onto the opposing contact surface or counterface of the retaining ring (10) in the direction of arrow (21), and that the film ring (11) merely distorts towards distortion (11'), that the adhesive surface (12) distorts towards the adhesive surface (12"), and the inner circumference of the film ring (11) is positioned around the upper edge (15) on the outer circumference of the resonator (1).

12. The apparatus of one of the preceding claims, **characterized in that** the contact force acting in the direction of arrow (21) generates a counterforce acting in the direction of arrow (22), thus preventing the force from being transmitted to the resonator (1).

13. The apparatus of one of the preceding claims, **characterized in that** owing to the relatively low thickness of the film ring (11) the latter ensures a lossless tangential flow in the direction of arrow (28) towards the measuring surface (25).

14. The apparatus of one of the preceding claims, **characterized in that** the sealing surface is formed between the upper sealing ring (17) in the area of the sealing surface (19) and in the area of the retaining ring (10) in the area of the sealing surface (20).

15. The apparatus of one of the preceding claims, **characterized in that** the elastomer ring (11) is applied directly onto the surface of the resonator (1) by means of a sputtering process or some other coating method, which ensures that the measurement chamber (36) is formed with this elastomer ring (11) in a completely smooth and edge-free manner, thus avoiding flow barriers.

## Revendications

1. Dispositif constitué d'une chambre de mesure et d'un résonateur (1) intégré dans la chambre de mesure au moyen d'une fermeture rapide pour la détection de liquides et la détection/mesure de la concentration de substances ou d'autres microorganismes dans les liquides présentant les pièces suivantes:
a. Un boîtier (42) consistant de deux éléments pouvant être fixées;
b. Un résonateur (1) en contact avec le fluide devant être analysé et réagissant à une addition en masse de la matière, substance, particule ou microorganisme à analyser en modifiant sa fréquence de résonance ou son amortissement ;
c. Un dispositif d'étanchéité avec bague d'étanchéité (17) disposé entre le boîtier (42) et le résonateur (1) dont la
d. surface d'appui est en contact avec d'autres pièces (36, 11, 11") du dispositif, **caractérisé en ce que**
e. le résonateur (1) est entouré et étanchéifié uniquement sur son pourtour externe par une bague élastomère mince, et que la bague élastomère (11) dans l'écart radial du diamètre extérieur (9) du résonateur (1) s'appuie d'une part de façon étanche contre l'une des bagues d'étanchéités supérieures (17) de la chambre de mesure (36) et d'autre part sur un anneau de maintien (10), le résonateur (1) s'appuyant sur une bague de contact (6) et le résonateur (1) étant poussé par la bague élastomère (11) avec précision sur la bague de contact (6) en exerçant une force sur la bague élastomère (11).

2. Dispositif selon la revendication 1, **caractérisé en ce que** le résonateur (1) est formé comme un corps oscillant discoïde qui présente sur son pourtour extérieur deux surfaces de contact (2, 3) opposées l'une à l'autre qui sont reliées à la surface du dessous du résonateur (1) essentiellement à fleur de surface.

3. Dispositif selon l'une des revendications précédentes, **caractérisé en ce que** les surfaces de contact (2, 3) viennent s'appuyer avec une pression de contact définie précisément sur les surfaces de contact opposées (4, 5) d'une bague de contact (6), laquelle est composée idéalement d'un matériau électriquement isolant et forme une conductivité électrique avec les surfaces de contact (2, 3) du résonateur (1).

4. Dispositif selon l'une des revendications précédentes, **caractérisé en ce que** les surfaces de contact (4, 5) présentent une amenée de courant (7) à partir, par exemple, de la sortie d'un circuit oscillateur, la fréquence d'oscillation de ce dernier étant asservie à l'oscillation mécanique du résonateur (1).

5. Dispositif selon l'une des revendications précédentes, **caractérisé en ce que** la bague élastomère est formée comme une bande annulaire (11) qui entoure le résonateur (1) uniquement dans une moindre mesure avec son diamètre intérieur (13) et retient ce dernier par son pourtour extérieur, formant ainsi un support à faible atténuation et sans déformation ainsi qu'un calfeutrage pour le résonateur (1) et évitant ainsi un contact avec les pièces oscillantes du résonateur (1).

6. Dispositif selon l'une des revendications précédentes, **caractérisé en ce que** les surfaces (19, 20) extérieures du résonateur (1) dans l'écart radial du support sont formées entre des bagues d'étanchéité (10, 17) associées l'une à l'autre et entre lesquelles la bague élastomère (11) est introduite.

7. Dispositif selon l'une des revendications précédentes, **caractérisé en ce que** les surfaces d'étanchéité supérieures et inférieures sont disposées à des fins d'étanchement entre la chambre de mesure (36) et le dispositif de mesure avec le radiateur (1) disposé radialement à l'extérieur dans l'écart du pourtour extérieur du résonateur (1).

8. Dispositif selon l'une des revendications précédentes, **caractérisé en ce que** le point d'étanchéité supérieur est formé par la bague d'étanchéité (17) circonférentielle au-dessous de la chambre de mesure (36) et que la surface de support qui lui fait face est formée par une bague de maintien (10) de matériau rigide, laquelle forme une contre-surface pour la bague d'étanchéité (17) supérieure qui lui fait face, et est disposée à distance (14) du résonateur (1), le résonateur (1) pouvant ainsi osciller librement.

9. Dispositif selon l'une des revendications précédentes, **caractérisé en ce que** le diamètre interne (18) de la bague de maintien (10) empiète sur le diamètre externe de la bague de contact (6) en formant un centrage impeccable de la bague de maintien (10) sur la bague de contact (6), le résonateur (1) disposé dans la zone de la bande annulaire (11) étant ainsi centré de façon précise dans l'espace de mesure (33) de la chambre de mesure (36).

10. Dispositif selon l'une des revendications précédentes, **caractérisé en ce que** la bague élastomère (11) maintenant le résonateur (1) présente préférablement un revêtement adhésif (12), un écrou inférieur/supérieur circonférentiel pour la prise du résonateur (1) par le pourtour extérieur de ce dernier, ou des nervures de maintien réparties sur son pourtour, ou qu'elle est faite électrostatique, la bague élastomère (1.1) étant formée selon la forme du pourtour du résonateur (1), qu'il soit rond, rectangulaire, quadrangulaire, hexagonal, en forme de parallélogramme ou d'une autre forme similaire, et son épaisseur étant bien plus mince que celle du résonateur (1).

11. Dispositif selon l'une des revendications précédentes, **caractérisé en ce qu'**une pression exercée dans la direction de la flèche (23) sur la bague d'étanchéité supérieure (17) est dirigée dans la direction de la flèche (21) dirigée vers le bas, vers la surface d'appui opposée ou contre-surface de la bague de maintien (10), et que la bande annulaire (11) est déformée uniquement dans la direction de la déformation (11'), la surface adhérente (12) se déformant sur la surface adhérente (12") et la bande annulaire (11) étant disposée sur le pourtour du résonateur (1) avec sa circonférence interne sur le rebord supérieur (15).

12. Dispositif selon l'une des revendications précédentes, **caractérisé en ce que** la force exercée dans la direction de la flèche (21) engendre une force de réaction dans la direction de la flèche (22), ce qui permet d'éviter que la force soit dirigée vers le résonateur (1).

13. Dispositif selon l'une des revendications précédentes, **caractérisé en ce qu'**en vertu de son épaisseur relativement faible, la bande annulaire (11) permet un écoulement tangentiel dans la direction de la flèche (28) vers la surface de mesure (25) sans engendrer de pertes.

14. Dispositif selon l'une des revendications précédentes, **caractérisé en ce que** la surface d'étanchéité est formée entre la bague d'étanchéité supérieure (17) dans la zone de la face du joint d'étanchéité (19) ainsi qu'autour de la bague de maintien (10), dans la zone de la surface d'étanchéité (20).

15. Dispositif selon l'une des revendications précédentes, **caractérisé en ce que** la bague élastomère (11) est montée directement sur la surface du résonateur (1) par pulvérisation ou un autre procédé de revêtement, la chambre de mesure (36) étant ainsi formée égale et sans arêtes avec la bague élastomère (11) en évitant la formation de barrières à l'écoulement.
